**Europäisches Patentamt**

**(19) European Patent Office**

**Office européen des brevets**

(11) Publication number : **0 470 197 B1**

# (12) EUROPEAN PATENT SPECIFICATION

(45) Date of publication of patent specification :
**18.08.93 Bulletin 93/33**

(51) Int. Cl.[5] : **B01J 23/84**

(21) Application number : **90908109.3**

(22) Date of filing : **25.04.90**

(86) International application number :
**PCT/SE90/00274**

(87) International publication number :
**WO 90/12646 01.11.90 Gazette 90/25**

(54) **CATALYTIC COMBUSTION OF SOOT FROM DIESEL ENGINES.**

(30) Priority : **27.04.89 SE 8901531**

(43) Date of publication of application :
**12.02.92 Bulletin 92/07**

(45) Publication of the grant of the patent :
**18.08.93 Bulletin 93/33**

(84) Designated Contracting States :
**AT BE CH DE DK ES FR GB IT LI LU NL SE**

(56) References cited :
**EP-A- 0 092 023**
**EP-A- 0 225 595**
**DE-A- 3 623 600**

(73) Proprietor : **Ahlström, Anders Fredrik**
**Brogatan 6**
**S-211 44 Malmö (SE)**
Proprietor : **ODENBRAND, Clas, Ulf, Ingemar**
**Rudeboksvägen 365**
**S-222 55 Lund (SE)**

(72) Inventor : **Ahlström, Anders Fredrik**
**Brogatan 6**
**S-211 44 Malmö (SE)**
Inventor : **ODENBRAND, Clas, Ulf, Ingemar**
**Rudeboksvägen 365**
**S-222 55 Lund (SE)**

(74) Representative : **Wallin, Bo-Göran**
**AWAPATENT AB Box 5117**
**S-200 71 Malmö (SE)**

## Description

The present invention relates to a method for the combustion of soot from diesel engines and to a catalyst for use in this method. The invention makes it possible to efficiently purify the exhaust gases from diesel engines both with regard to CO and unburnt hydrocarbons and with regard to soot.

Diesel engines have two major advantages over spark ignition engines. The fuel economy is 25-45% better, and the emissions of carbon monoxide (CO) and hydrocarbons are low. Because of the excellent fuel economy, the number of diesel-powered vehicles is expected to increase in the future, especially in a situation with high fuel prices. Although the emissions of carbon monoxide and unburnt hydrocarbons from diesel engines are low, something must be done in order to decrease the emissions of nitrogen oxides and soot particles.

To cope with the emissions from spark ignition gasoline engines, use is made of so-called three-way catalysts. In this case carbon monoxide and hydrocarbons in the exhaust gases reduce the nitrogen oxides by means of precious metal catalysts. This concept is applicable only when the concentration of oxygen in the exhaust gases is very low. Diesel exhaust gases contain approximately 10% of oxygen and only very low concentrations of carbon monoxides and hydrocarbons, for which reason three-way catalysis cannot be used for the exhaust gases from diesel engines. To decrease the emissions of nitrogen oxides, it has been tried to use exhaust gas recirculation and engine modifications. In the case of stationary diesel engines, one has also used selective catalytic reduction of nitrogen oxides with ammonia [cf. P. Schoubye, K. Pedersen, P.S. Pedersen, O. Grøne and O. Fanøe, "Reduction of $NO_x$-emissions from Large Diesel Engines", Proc. 17th CIMAC-cong., Warsaw, June 8-11, 1987]. However, these measures have no effect upon the emission of soot particles.

The emission of soot particles is, however, the most serious problem of diesel engines.

One method of solving this problem is to separate the soot particles from the exhaust stream through filtration [cf. C.S. Weaver, SAE 840174, 1984 (109)]. Porous ceramic materials are usually used as filters. As the exhaust gas temperature seldom exceeds 573 K, the soot particles will accumulate in the soot trap. This causes a dramatic increase in the pressure drop through the trap. It is therefore necessary to periodically regenerate the trap by combustion of the trapped particles.

Different methods have been used in order to regenerate particle traps [cf. C.S. Weaver, SAE 840174, 1984 (109)]. These methods can be divided into catalytic and non-catalytic methods. In the former case, fuel additives (i.e. organometallic compounds) and catalytic coating of the traps have been used. In the latter case, the trap is heated electrically, or by a burner. By throttling the intake air, the exhaust gas temperature is raised sufficiently to burn out the trapped particles. Non-catalytic methods often result in complicated and expensive systems, and the catalytic methods are at present not sufficiently effective. Most catalysts published in this field (e.g. EP-A-0,077,524, EP-A-0,164,182, US-A-4,510,265 and Japanese Patent Publication JP 59/186643-A2, October 23, 1984) make it possible to combust particles at temperatures above 673 K. However, as mentioned earlier, diesel exhaust gases seldom reach temperatures above 573 K. This is a dilemma and will result in an extensive accumulation of diesel soot in the particle trap, and this again causes a further problem since the combustion process is highly exothermic, causing the temperature to rise dramatically when the soot eventually ignites. At such temperatures, the trap will crack or even melt down.

During our research work which resulted in the present invention, we found very few publications on catalytic combustion of exhaust gases from diesel engines. Due to this fact, mechanisms for catalytic burning of carbon (graphite and activated carbon) were studied. In this field, a relatively large number of studies have been done [see e.g. D.W. McKee, Carbon, 8 (1970) 623; D.W. McKee, Carbon, 8 (1970) 131; D.W. Mckee, Fuel, 62 (1983) 170; R.T.K. Baker and J.J. Chludzinski Jr., Carbon, 19 (1981) 75]. Usually, carbon has been impregnated with solutions of transition metal salts. The combustion experiments have then been carried out in TGA-apparatus (TGA = thermogravimetric analysis). In this case, the carbon is placed in a balance and a gas mixture containing oxygen is conducted over the bed of carbon The temperature of the gas stream is measured. Since there is no gas flow through the bed, the cooling will be insufficient, and the temperature in the bed will rise due to the highly exothermic nature of the combustion of carbon. The actual temperature in the carbon bed could thus be much higher than the temperature measured in the gas stream. Because of the poor flow conditions, there will also be a pronounced risk of diffusion limitations during the combustion process. The specific surface areas for activated carbon and diesel soot are quite high. Due to this fact, the catalytically active material will be well dispersed on the surface, resulting in a good contact between the carbon and the catalyst. In an investigation performed by McKee [D.W. McKee, Carbon, 8 (1970) 623], graphite was impregnated with solutions of metal salts and then combusted. The investigations performed by McKee showed that oxides of Pb, V and Mn increased the combustion rate significantly, and that Ag and oxides of Co had intermediate activities, whereas precious metals were relative inactive. A similar investigation by Murph et al [M.J. Murph, L.J. Hillenbrand and D.A. Trayser, United States Environmental Protection Agency, R & D Program Report EPA-600/7-79-232b, Oct. 1979] using graphite confirmed the high activity of oxides of Pb and Mn.

In the experiments reported above, graphite and activated carbon were used. However, literature reports some experiments in which diesel soot was mechanically mixed with metal oxide-based catalyst material and then burnt, using thermogravimetrical analysis methods (TGA analysis). Watabe et al [Y. Watabe, K. Irako, T. Miyajima, T. Yoshimoto and Y. Murakami, (SAE spec. publ.). SAE, 830082 (1983) 45, and European Publication EP-A-0,092,023] have conducted such experiments and reported that oxides of vanadium and molybdenum were the most active, but that oxides of Cu were also relatively active, whereas oxides of Pb and Mn had low activities for the combustion of diesel soot. Also this investigation showed that precious metals were inactive for burning diesel soot. Watabe et al also investigated if the mixing technique was of importance to the combustion process. These authors tried mechanical mixing in the presence and in the absence of acetone, but were unable to notice any difference. The catalyst compositions reported by Watabe et al were, however, not suitable for such a highly efficient purification of exhausts as is necessary in the purification of exhausts from diesel engine vehicles. The catalysts specifically mentioned by Watabe et al and containing both vanadium and copper, had a ratio of 50:50 or 20:40 between vanadium and copper. The experiments by Watabe et al primarily aimed at evaluating carrier materials for soot particle traps, especially porous ceramical bodies, so-called ceramic foam. However, Watabe et al indicate that the catalysts of Cu-K-Mo and Cu-K-V in the ratios 4:4:2 should be effecient catalysts.

Yung Fang et al [Y. Fang et Y. Yao, Journal of Catalysis, 39 (1975) 104] have investigated the $SO_2$ deactivation of several metal oxide catalysts in the combustion of CO and hydrocarbons. Their study shows that oxides of manganese are very susceptible to poisoning by $SO_2$. However, these authors conclude that oxides of Cu have a relatively good $SO_2$ stability. On the other hand, their study did not comprise Ag or oxides of Pb and V. It is, however, reasonable to believe that oxides of V have a higher resistance to $SO_2$ poisoning. This statement is supported by I. Nam et al [I. Nam, J.W. Eldridge and J.R. Kittrell, Ind. Eng. Chem. Prod. Res. Dev., 25 (1986) 192] who found that $SO_2$ deactivation in selective catalytic reduction of nitrogen oxides with ammonia was caused by plugging of the pore system of the catalyst by compounds containing sulphur and ammonia. No poisoning of the $V_2O_5$ phase as such could be detected.

As will be explained in the following, soot has an extremely complicated composition. The soot contains sulphur compounds and transition metals as well as hydrocarbons. All of these components will affect the combustion process. An important problem is the fact that large amounts of $SO_2$ will desorb during the heating of the diesel soot. This results in an immediate poisoning of oxides susceptible to sulphur, such as oxides of Mn and Pb.

Soot particles are built up of small spherical primary particles composed mainly of carbon and having a diameter in the range of 20-60 nm, which is typical of soot formation in the gaseous phase. These primary particles agglomerate to form secondary aggregates. The agglomeration already starts in the combustion chamber and continues all the way through the exhaust system. The secondary particles can become rather large, but more than 90% of these particles have a diameter below 300 nm. Large hydrocarbon molecules are condensed on the soot particles at the temperatures prevailing in diesel exhausts.

The chemical composition of soot particles has been reported in literature [e.g. M. Mashaly, F. Nevejans, P. Sandra and M. Verzek, Proc. Int. Symp. Capillary Chromatografy, 6, 340 (1985); and K-H Lies, A. Hartung, A. Postulka, H. Gring and J. Schulze, Dev. Toxicaol. Environ. Sci, 13, 65 (1987)]. An elementary analysis of diesel soot [E. Goldenberg and P. Degobert, Revue de L'Institut Français du Pétrole, 41 (6), 797 (1986)] shows that, in addition to carbon, soot also contains hydrogen, nitrogen, oxygen, sulphur and a number of other elements in trace amounts. A representative diesel soot contains approximately 70 wt% C, 20 wt% 0, 3 wt% S, 1.5 wt% H, <1 wt% N and <1 wt% trace elements. The composition of elementary components in the soot may vary considerably depending on the fuel quality, the engine efficiency and the running conditions. According to Otto et al [K. Otto, M.H. Sieg, M. Zinbo and L. Bartsiewicz, "SAE Congress and Exposition", SAE 800336, 277 (1980)] the amount of volatile hydrocarbons can vary between 10 and 90 wt%. Fresh soot particles contain a higher level of volatile hydrocabons than soot particles aged in the exhaust manifold. Because diesel fuel contains sulphur, relatively large amounts of sulphur are also found in the soot particles. The nitrogen content of diesel soot has its origin in nitrogen oxides formed during the combustion process. Through reactions between nitrogen oxides and aromatic hydrocarbons, aromatic nitro and nitroso compounds can be produced. Some of these compounds are highly mutagenic. The trace amounts of other elements, mainly metals, have their origin in the fuel or in the lubricating oil. These trace elements are incorporated into the soot particles during the combustion process.

As mentioned before only few studies exist on the combustion of diesel soot. These studies show that combustion rates are much higher with diesel soot than with graphite or activated carbon. Otto et al thus obtained results showing that the combustion rates were approximately 100 times higher with diesel soot than with graphite. The investigations by these authors also show that the reaction between diesel soot and oxygen can be described satisfactorily by first order kinetics in respect of oxygen.

EP 0 470 197 B1

The physical characteristics of diesel soot change as the combustion proceeds. Otto et al showed that the specific area of diesel soot increased from 100 $m^2/g$ initially to over 300 $m^2/g$ when 70% of the soot was burnt. Thus, not only the chemical, but also the physical characteristics of the soot particles are changed during combustion.

The hydrocarbons in the soot can be classified into different groups, depending on their chemical characteristics [cf. G. Hunter, J. Scholl, F. Hibbler, S. Bagley, D. Leddy, D. Abata and J. Johnson (SAE Spec. Publ.), SAE, 810263 (1981) 111]. Several of these are mutagenic substances. Since the soot particles are very small, they can easily reach far down into lung tissue when inhaled. For this reason, these emissions have a decided impact on human and animal health. This indicates the importance of an efficient purification of diesel engine exhausts, especially with regard to soot.

The European Document EP-A-0,092,023 mentioned above relates to a catalyst which may contain vanadium and copper in mixture ratios which, according to the Examples, are given as 50:50 and 20:40, respectively. However, in this document Watabe et al emphasise catalysts of Cu-K-Mo and Cu-K-V in the ratios 4:4:2 which are said to be the most effective catalysts.

The European Document EP-A-0,225,595 relates to a highly active catalyst for burning of hydrocarbons. This publication does not mention soot burning which differs substantially from the mechanisms of hydrocarbon burning. Thus, this document is not relevant to the burning of soot. No catalysts with vanadium and copper ratios according to the present invention are mentioned.

The German Publication DE-A-3,623,600 relates to a catalyst which contains alkali metal and copper vanadate $Cu_3V_2O_8$ and is used for lowering the ignition temperature of diesel soot. Also this document mentions no catalysts containing vanadium and copper in ratios according to the present invention.

Known catalytic and non-catalytic methods for burning soot have different drawbacks which have limited their use. Therefore, there is a great need for highly active catalysts which can both enhance the burning of diesel soot and be regenerated continuously during their use.

One object of the present invention is, therefore, to develop a highly active catalyst for burning diesel soot. Other objects will appear from the description below.

The present invention is based on the insight that burning of diesel soot can be performed catalytically under the action of metal oxides and metals. The characteristic features of the invention are set forth in claims 1 and 5, especially preferred embodiments of the invention being stated in the sub-claims.

The research work on which the present invention is based was intended to try and establish which factors are important to obtain a highly active catalyst. The theories which were developed during the work indicated that a composite oxide having special and narrow molar ratios between V and Cu should be particularly active. This was verified and quantified by experiments, as will appear from the following and the Examples. The literature and patent publications referred to above do not contain any information pointing to a surprising improvement of the effectiveness when changing the molar ratio between V and Cu considerably, compared to what has been mentioned in this literature and patent publications which seem to point away from the present invention.

The present invention relates to a method of purifying exhaust gases from diesel enginges by catalytic burning of soot and hydrocarbons, in which method the exhausts are conveyed at a temperature of at least 300°C, preferably at least 350°C, over a catalyst containing vanadium and copper oxides carried by a carrier, this method being characterised by using a catalyst in which the molar ratio of V:Cu is from 85:15 to 95:5.

The invention also relates to a catalyst for purifying exhaust gases from diesel engines, this catalyst comprising a carrier and a catalytic material comprising oxides of vanadium and copper, the catalyst being characterised in that it contains vanadium and copper in a molar ratio of V:Cu of from 85:15 to 95:5.

The experiments on which the present invention is based thus have shown that oxides of vanadium and copper are the only oxides capable of considerably increasing the combustion rate. $V_2O_5$ has a superior activity at temperatures above 623 K, while CuO is the most active catalyst below this temperature. Since the soot phase is burnt mainly at temperatures above 623 K, $V_2O_5$ is the most active catalyst for burning the non-volatile components of the diesel soot. Oxides of Mn and Cr as well as elementary Ag and Pt have high activities in the combustion of hydrocarbons that desorb from the diesel soot. On the other hand, oxides of Co, Fe, Mo and Pb have low activities in the whole temperature range 573-723 K studied.

In the investigations on which the present invention is based, it was found that Ag, Pt and the oxides of Cu and Mn are somewhat less active after having come into contact with $SO_2$. However, the activity of $V_2O_5$ seems not to decrease in an appreciable degree when this oxide comes into contact with $SO_2$. The composite catalyst which, according to the invention, contains V and Cu in a molar ratio of 85:15 to 95:5, is not either affected to a higher degree by sulphur, which imparts to this catalyst excellent stability and long useful life. This is an advantage in a catalyst indended for use in the purification of exhausts from diesel engines.

The reason for the high activity of $V_2O_5$ could possibly be explained by its low melting point (963 K). At

4

EP 0 470 197 B1

the Tamman temperature, the atoms in the structure obtain an appreciable mobility. This temperature is about half the temperature of the melting point. Baker and Chludzinski [R.T.K. Baker and J.J. Chludzinski Jr., Carbon, 19 (1981) 75] state in explanation of the observed mobility of the particles of CuO in a graphite matrix that the temperature was above the corresponding Tamman temperature (799 K). In addition, these authors state that CuO is transformed, at this temperature, from the non-wetting state into the wetting state. Since $V_2O_5$ becomes wetting at the Tamman temperature (482 K), the contact efficiency between the soot and the catalyst will be promoted. Another explanation of the high activity of $V_2O_5$ could be that vanadium can exist in several oxidation states at small energy differences. Because of this, vanadium can easily change its oxidation state during the catalytic process. According to McKee [D.W. McKee, Carbon, 8 (1970) 623], the catalytic effect of $V_2O_5$ in the oxidation of graphite resulted from the interaction of graphite and $V_2O_5$ to give $V_6O_{13}$. $V_6O_{13}$ was then re-oxidised back to $V_2O_5$ by ambient oxygen. Such lower oxides are certainly intermediates in the cyclic oxidation-reduction processes which lead to a catalytic combustion of graphite and soot.

The investigations which have led to the present invention and have been performed with different ratios between soot and catalyst, using different particle sizes, show that combustion occurs mainly on the external surfaces of the particles, whereas the internal surfaces of the catalyst particles are important when desorbed hydrocarbons are to be combusted.

As a summary of the investigations it can be concluded that oxides of vanadium are highly active in the catalytic combustion of diesel soot at temperatures above 573 K, especially above 623 K. Further, the experiments have confirmed other authors' statements that Ag, Pt and oxides of Cu, Cr and Mn have high activities at low temperatures, when the combustion of desorbing hydrocarbons is important. Further, since copper oxides seem to have a somewhat higher resistance to sulphur than the above-mentioned substances, this oxide has been used in the present invention. Another and much more important reason for combining oxides of vanadium and copper is the discovery of a synergistic effect between these oxides within a specific range of mixing ratios. Another finding during the experiments is that the soot burning process takes place mainly on the external surfaces of the catalyst particles and is more pronounced at temperatures above 623 K. Furthermore, it has been found that a release of $SO_2$ during the heating of soot particles can result in an immediate poisoning of catalyst sensitive to sulphur. Another finding is that a long-term deactivation with $SO_2$ seems to reduce the activity of copper oxide only to a low degree, but to result in a practically unchanged activity for vanadium oxides. These results confirm that a catalyst for burning diesel soot based on oxides of vanadium and copper should have a good resistance to sulphur poisoning. This surmise was confirmed in connection with the present invention. If it is desired to burn hydrocarbons desorbed from the diesel soot, the oxides of vanadium and copper may advantageously be used in combination with Ag, Pt, Rh or oxides of Mn.

When using the present invention, the catalytically active material can be dispersed on a coating or a carrier of the type $\gamma$-alumina for simulating the conditions in a particle trap. Thus, it is possible to use a wire netting filter, the wires of which have been coated with a layer which, in its turn, is impregnated with the catalyst material. However, the carrier preferred at present is a body of honeycomb structure. Such bodies are used to a great extent for exhaust purification devices for gasoline-powered vehicles and therefore are easily obtainable. Also these carriers may be coated with a layer which is impregnated with a catalytic material. Alternatively, the catalytic material may be impregnated directly into the carrier. Also tube filters can be used, the tubes of which have been coated with the catalytically active material. The choice of carrier system depends on the construction of the exhaust system and can be left to the user of the method and the catalyst according to the present invention. However, it is important that the carrier can withstand the present high temperatures so that it is not necessary to impose temperature limitations during use of the exhaust purification device.

As mentioned before, and when using the the method of the present invention to purify exhaust gases from diesel engines, the exhaust gases are brought into contact with the catalyst at a temperature of at least 300°C, preferably at least 350°C. The upper temperature limit is set mainly by the ability of the carrier material and the enclosing receptacle to withstand high temperatures. A practical upper limit can be 450°C or 500°C.

The amount of active material (i.e. oxides of vanadium and copper) which suitably is used in the catalyst is depending on the carrier used and the method used for coating the carrier with the active material. As a starting point it may be mentioned that, if the actual carrier consists of a wash coat of aluminum oxide or another comparable high-temperature resistant material, a loading of 5-25 wt% active material, based on the mixture of carrier and active material, may be suitable, if the active material is distributed homogeneously in the coating. In its turn, this coating can be applied on another substrate, such as a monolith of honeycomb type. If one wishes to have a higher activity than that which is obtained at the lower end of the range, the lower limit may preferably be increased to 7.5 wt%. The upper limit has been given as 25 wt%, but higher loadings than 20 wt% do not significantly increase the activity. For economical reasons, the upper limit may therefore preferably be 20 wt%. Correspondingly, loadings of 0.01-25 wt%, based on the mixture of carriers (wash coat material), oxide of vanadium and copper and precious metal, can be used as starting points when dealing with loadings of platinum, palladium and rhodium. At an increase of loading at the lower end of this range, the additional activity is not very large, and for economical reasons the upper limit therefore is preferably 0.1 wt%.

The invention will now be described with reference to the attached drawings.

Fig. 1     is a diagram showing the logarithmic combustion rate of diesel soot as a function of the inverted value of the temperature in a preliminary experiment.

Fig. 2     is a diagram showing the selectivity for the production of CO as a function of the temperature in another preliminary experiment.

Fig. 3     is a diagram showing the combustion rate as a function of the molar content of vanadium in a composite oxide catalyst according to the present invention.

Fig. 4     is a diagram showing the relative EDAX signal from Al as a function of the content of active phase in a catalyst according to the present invention.

Fig. 5     is a diagram showing the combustion rate as a function of the content of active phase (90 mole% V, 10 mole% Cu) in a catalyst according to the present invention.

Fig. 6     is a diagram showing the selectivity for CO production as a function of the temperature for one example of a catalyst according to the present invention.

Fig. 7     is a diagram showing the combustion rate as a function of the Pt content of a composite catalyst of vanadium and copper oxides and platinum according to the present invention.

Fig. 8     is a diagram showing the combustion rate as a function of the calcination temperature in one example of a catalyst according to the present invention.

Fig. 9     is a phase diagram for the system $V_2O_5$ and CuO.

Fig. 10    shows schematically an apparatus used in the experiments with the present invention.

As mentioned above, the invention is based on the insight that vanadium pentoxide in combination with copper oxide is an effective catalyst for the combustion of diesel soot.

In the following, results are presented from an investigation of a number of catalytically active materials, mainly metal oxides, in the burning of diesel soot under conditions which resemble the conditions in particle traps.

The soot particles used in the experiments presented below were collected from the exhaust streams from diesel engines at Volvo Truck Corporation in Gothenburg, Sweden. After collection, the soot was kept in a closed vessel in order to avoid desorption of volatile hydrocarbons. The chemical composition of the soot used in the experiments is given in Table 16, below.

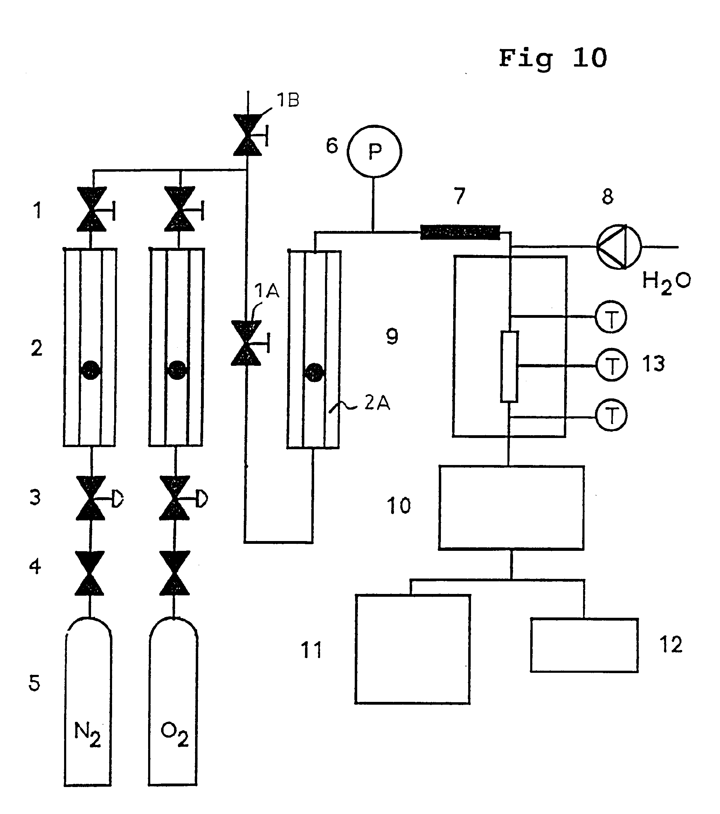

Fig. 10 shows schematically the apparatus used for the experiments with the invention. This apparatus comprised three units, namely a gas mixing unit, a reactor unit and an analysis unit. The gas mixing unit comprised needle valves 1, rotameters 2, shut-off valves 3, reducing valves 4, and gas tubes 5 for oxygen and nitrogen. The gas mixing unit further comprised another needle valve 1A for regulating the mixed flow of oxygen and nitrogen, and an outlet valve 1B. A rotameter 2A was connected in the line from the needle valve A, ahead of a manometer 6. At the outlet of the gas mixing unit, there were a gas preheater 7 and an injection pump 8 for supplying water to the line in which the gas stream was conveyed to a furnace 9 with a reactor. After the furnace, there were a cooling unit 10, an IR spectrometer 11, and a gas chromatograph. The temperatures in the intake and outlet lines, and also in the reactor, were supervised by means of thermocouples 13. When using further gases, besides nitrogen and oxygen, one or more further sets of components 1-5 were connected ahead of the needle valve 1A.

$N_2$, $O_2$ and, optionally, $SO_2$ ($N_2$) were supplied from separate gas tubes to the gas mixing unit. The different gas flows were measured by the rotameters 2, the measured values of which were corrected with respect to the absolute pressure in the equipment. The partial gas flows were united to a total flow which was measured by a rotameter 2A. A flow divider consisting of the needle valve 1B was installed to make it possible to vary the total flow through the reactor within wide limits, without having to change the partial flows from the various gas tubes. The inaccuracy of the flow setting was at most 5%.

The preheater 7 for preheating the gas mixture before the inlet end of the reactor unit consisted of a tube having a length of one meter and being coiled with a resistance wire for electrical heating. After preheating, the gas mixture had a temperature of about 200°C. Before the introduction in the furnace, steam was added using the injection pump 8. The water injection was carried out with a syringe directly into the preheated gas mixture. After the water injection, the gas mixture was conveyed into the furnace where the final preheating to the prevailing temperature took place in a helically coiled tube having a length of 3 m. The furnace was designed for a maximum operation temperature of 700°C. The furnace was heated by resistant heating. A fan had been installed to increase the convection in the furnace. The temperature stability of the furnace was very good, and the temperature fluctuations were less than 0.2°C at 600°C. At maximum heating efficiency, the temperature could be increased by more than 30°C/min. in the furnace. The temperature in the furnace could be increased successively.

6

After final preheating, the gas mixture passed through the reactor proper. The temperature at the inlet of the reactor, in the soot bed and in the outlet of the reactor was measured with the three thermocouples 13 (chromelalumel from Phillips) mentioned above. The temperature at the reactor inlet was used as a signal to a regulator, while the two other thermocouples were connected in series so that the temperature difference between the soot bed and the reactor could be recorded. This made it possible to use the reactor temperature as a reference temperature, and the heating effect in the reactor zone could be followed with high accuracy; temperature differences of 1°C could be recorded.

After leaving the reactor, the gas mixture was conducted through a cooler 10 which was a refrigerator in which the water was removed by condensation. When leaving the refrigerator 10, the gas mixture had a dew point of +4°C. The gas mixture was conveyed to an IR instrument 11 (Siemens Ultramat 22P) for 3 sec. after leaving the reactor, this indicating that the useless volumes were small. The IR instrument used could detect CO in the interval 0-300 ppm and $SO_2$ in the interval 0-1000 ppm. The measurement accuracy was <0.5% at a full turn of the instrument. A part of gas flow was conducted through a T-tube to an injection valve on a gas chromatograph 12 (Hewlett Packard 5890 A). The column used in the equipment (Carbosiv IIS, 120/140 mesh, 10 ft, 1/4 inch) was able to separate air, CO, $CO_2$, $H_2O$ and $SO_2$. In order to prevent $SO_2$ adsorption in the column, use was made of a silanised glass column. Both the IR instrument and the gas chromatograph were calibrated regularly, using a gas mixture with known contents of CO, $CO_2$ and $SO_2$. During the experiments the concentrations of CO and $CO_2$ were measured and the combustion rate ($r_{tot}$, expressed as nmole burnt carbon per second) was calculated. In some of the experiments, the gas mixture also contained $SO_2$. The experiments were conducted to detect a possible catalyst deactivation due to sulphur poisoning. The running of the reactor was varied, but the maximal relative consumption of oxygen through the reactor never exceeded 5%. The standard deviation in the all the calculated combustion rates was less than 10%.

The catalytically active material mainly consisted of metal oxides. In the particle traps, the catalytical active material was distributed on a coating (often $\gamma$-$Al_2O_3$) formed as a wash coat. In order simulate these conditions, use was made of $\gamma$-$Al_2O_3$ particles having a diameter of 0.25 mm as carrier material. The carrier material for the experiments was obtained from Alcoa Chemicals, USA. The specific surface area was 290 $m^2$/g before impregnation.

The catalysts were prepared by impregnating the carrier material with aqueous solutions of different metal salts. All of the chemicals used were of analytical grade, and the water used was distilled twice. For platinum, a solution of $H_2PtCL_6$ was used, and for forming $V_2O_5$ and $MoO_3$ use was made of solutions of $NH_4VO_3$ (oxalic acid) and $(NH_4)_6Mo_7O_{24}\cdot4H_2O$, respectively. Otherwise, corresponding nitrates were used. After impregnation, the catalysts were dried at 383 K in an oven for 24 h. Calcination was performed in a reactor at 773°C in air for 1 h. The Pt-catalyst was reduced in similar manner for one hour in an atmosphere containing 5% $H_2$, the balance being $N_2$. All catalysts, except the Pt-catalyst, contained 10 wt% active material (calculated on the corresponding metal). The Pt-content of the Pt-catalyst was 1 wt%. Higher levels are not realistic due to the high price of precious metals.

Since the outer surface of the particles should be important in the burning of soot, small fractions should not be prepared by milling after impregnating the carrier material with the active phase. Instead, the carrier material should be milled to the suitable grain size before impregnation.

The experimental procedure was as follows:

Mechanical mixtures of diesel soot and catalyst (0.05 g soot and 0.5 g catalyst) were used in these experiments. The mixtures were placed in the reactor. Unless otherwise indicated, gas mixture containing 6% $O_2$ and 7% $H_2O$, the balance being $N_2$, was conducted through the reactor at a flow rate of 90 l/h. The temperature in the reactor was increased by 5 K per minute to 698 K. The combustion rate $r_{tot}$ (nmole per second) was calculated at different temperatures.

The ratio between the amount of soot and the amount of catalyst decreased slowly during the experiments as the soot phase was combusted. It is therefore important to select such conditions that the soot is in excess during the whole experiment. If the experiment takes too long (i.e. too low a temperature rise rate), or if the initial soot:catalyst ratio is too low, the catalyst will be in excess at the end of experiment. Conversely, if the temperature rise rate is too high, the conditions will be far from stationary, with ensuing local overheating in the bed and a decided risk of ignition. If the soot: catalyst ratio is too high, it is difficult to detect the catalytic activity as soot is combusted also in the absence of catalysts. Practical tests showed that a temperature rise rate of 5 K/min. and an initial soot:catalyst ratio of 0.1 (on weight basis) satisfy the above requirements.

In the experimental results described below the soot was burnt catalytically in two different ways, on the one hand in the form of mixtures of soot and carrier material and, on the other hand, as mixtures of catalysts, carrier material and soot.

## EXAMPLE 1

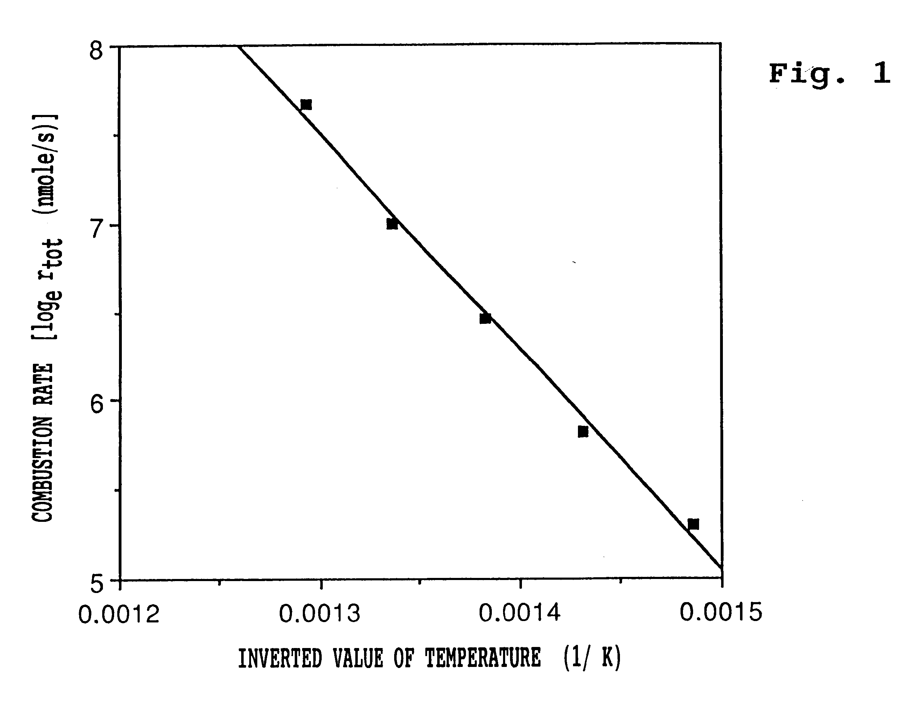

This Example is a preliminary experiment for comparison, showing that diesel soot is combusted also in the absence of catalyst material. In the experiment using the test equipment described above, a mixture of 0.05 g soot and 0.5 g $\gamma$-alumina was placed in the reactor. The experiment was considered important to verify that alumina normally is inactive at combustion reactions. The total gas flow rate was 90 l/h. The temperature increase rate was 5 K/min., and the gas mixture consisted of 6% $O_2$ and 7% $H_2O$, the balance being $N_2$. Fig. 1 shows the combustion rate as a function of the inverted value of the temperature in an Arrhenius graph. The measured values are given in Table 1, below. The combustion rate increased from 200 nmole/s. to 280 nmole/s. when the temperature was raised from 673 K to 773 K.

The product gas was analysed for both CO and $CO_2$ to make it possible to calculate the selectivities. These selectivities have no fundamental significance, since they are the result of secondary reactions at which CO is oxidised to $CO_2$. However, in this case it is important to know how much CO has been produced during combustion. If too much CO is reduced, this would lead to an increased emission of CO from the diesel vehicle.

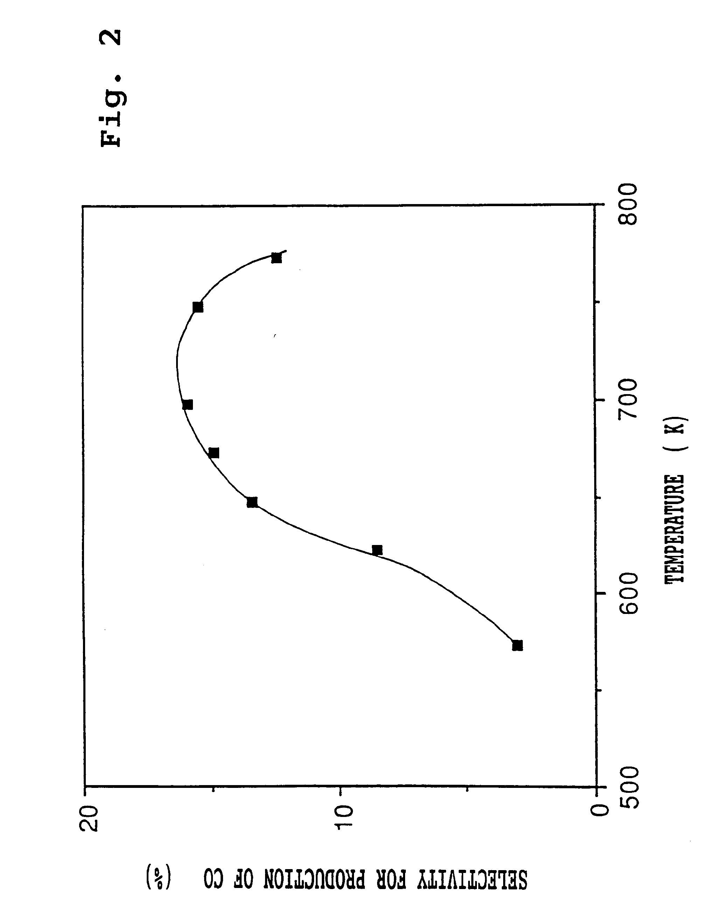

As will appear from Fig. 2 and Table 2, the selectivity for the production of CO reached a maximum of 16% at 698 K. It is important to realise that this selectivity is partly the result of secondary reactions, at which CO is oxidised to $CO_2$.

## EXAMPLE 2

Preliminary experiments were carried out also with mixtures of catalyst and soot. These experiments were performed using a number of metal oxides, and also using the metals Ag and Pt. The same gas flow rates and temperature rise rates as in Example 1 were used, with the exception of the oxide mixture $V_2O_5$/CuO (90 mole% V, 10 mole% Cu). A mixture of 0.05 g soot and 0.5 g catalyst and carrier, respectively, was placed in the reactor. When using a catalyst, the catalytical material consisted of 10 wt% active phase and 90 wt% carrier material. To make it possible to evaluate whether a catalyst was active or not, the combustion rate obtained must be related to the combustion rates valid for mixtures of soot and alumina without any catalytically active material. The ratio between these combustion rates at different temperatures are reported in Table 3.

The data in Table 3 indicate that, at temperatures below 623 K, mainly desorbed hydrocarbons are combusted. It can be established that CuO, $MnO_2$, $Cr_2O_3$, Ag and Pt are quite active in this low temperature range. At high temperatures (above 623 K), $V_2O_5$ has a superior activity. Since mainly the soot phase is combusted at these temperatures, $V_2O_5$ is the most active catalyst for the combustion of soot. Several of the investigated catalysts failed to show sufficient activity to be of interest, i.e. oxides of CO, Fe, Mo and Pb.

## EXAMPLE 3

Since diesel exhaust gases contain $SO_2$, it was considered important to investigate whether the catalysts are susceptible to sulphur poisoning. Large quanities of $SO_2$ are released as the soot is heated (this may result in gaseous $SO_2$ concentrations as high as 100 ppm). Therefore, catalysts which are very susceptible to sulphur were deactivated immediately during the experiments.

Deactivation was performed in a specially designed reactor. The gas mixture containing 1000 ppm $SO_2$ and 10% $O_2$, the balance being $N_2$, was conducted through the catalyst bed at 573 K and at a space velocity of 2000 $h^{-1}$ for 8 h. After this deactivation, the catalysts were analysed in respect of their performance during combustion. Table 4 gives the ratio between the combustion rates for deactivated and fresh catalyst using 0.05 g soot and 0.5 g catalyst (containing 10 wt% active phase and 90 wt% carrier material), a total flow rate of 90 l/h, and a gas composition of 6% $O_2$, 7% $H_2O$ and 100 ppm $SO_2$, the balance being $N_2$. The temperature rise rate was 5 K/min. As appears from the Table 4, the activity had decreased for CuO, $MnO_2$ and Ag. Pt was less active at low temperatures after deactivation, whereas $V_2O_5$ seems to have been activated by $SO_2$.

## EXAMPLE 4

Considering the good results reported above, using $V_2O_5$ as a catalyst for the combustional soot from diesel engines, further experiments were carried out in order to investigate the value of mixtures of oxides or vanadium and copper in the catalytic combustion of diesel soot. The catalysts used in the following were prepared by repeated impregnation of $\gamma$-alumina with aqueous solutions of $NH_4VO_3$ (oxalic acid) and $Cu(NO_3)_2$. After impregnation, the catalysts were dried at 383 K for 24 h and then calcined at 773 K in air for 1 h.

The catalysts nominally contained 10 wt% active phase and had different V:Cu ratios. The various catalysts, the results from EDAX analyses and the specific surface areas are shown in Table 5. From this Table, it can be seen that the agreement between the calculated and the actual surface compositions is rather good for the catalysts containing much vanadium. The agreement is poorer for the catalysts containing only small amounts of vanadium. The specific surface area descreased from a value of 290 $m^2/g$ (for the carrier before impregnation) to values around 200 $m^2/g$. This is due mainly to clogging of the minor pores during the impregnation step. In addition, the carrier may have sintered to some extent during the calcination.

The combustion experiments were carried out using a mixture of soot and catalyst (0.05 g soot + 0.5 g catalyst) In a flow reactor. The catalyst contained 10 wt% active phase. The gas mixture contained 10% $O_2$ and 7% $H_2$, the balance being $N_2$, and was conducted through the reactor at a total flow rate of 90 l/h. The temperature was increased at a temperature rise rate of 5 K/min. to 698 K.

The specific surface areas of the catalysts used in the following were measured using an area meter (Flow-Sorb II from MicroMeritics) through adsorption of $N_2$ according to the one-point BET method. The catalysts were flushed with $N_2$ at 623 K for 1 h prior to these measurements.

The surface composition of the catalysts was determined using a scanning electron microscope (ISA-100 A) combined with an EDAX equipment (PGT 100 Alpha System) (EDAX = Energy Dispersive Analysis of X-ray).

The qualitative bulk compositions were determined using X-ray defraction studies (Phillips PV 1710). The investigations were carried out on powdered catalysts at room temperature. An X-ray source from Phillips was used [$Cu(K_{\alpha1}$, $\lambda=0.154056$ nm]. The equipment was calibrated with a Si-standard.

The soot particles used in these experiments were the same as described above and in Table 16.

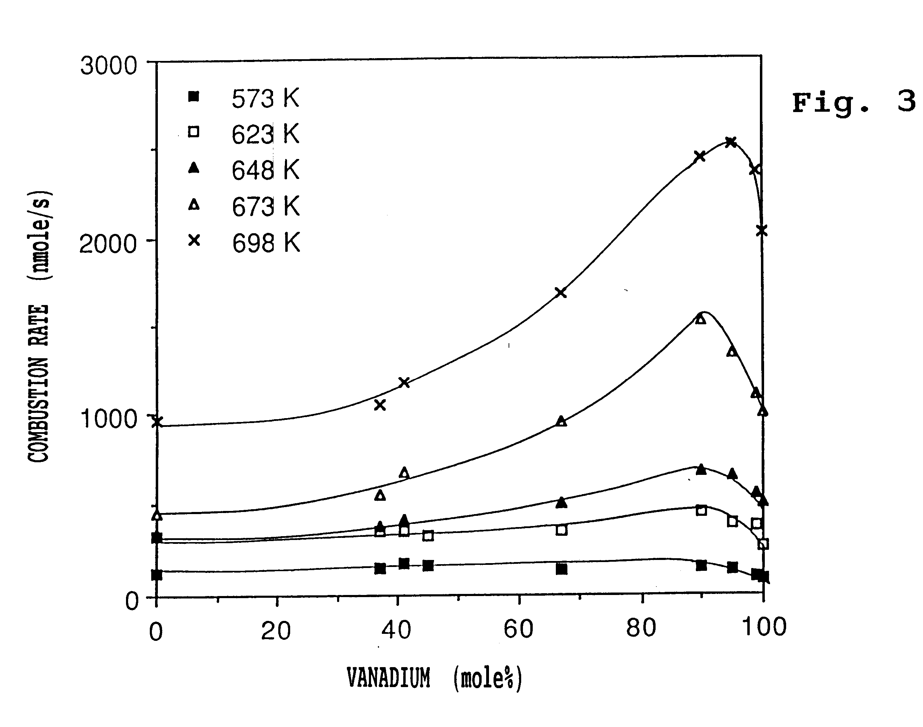

The combustion rates are shown as a function of the molar fraction of vanadium in the catalyst surface in Fig. 3. The corresponding numerical values are given in Table 6. The activity of pure $V_2O_5$ is relatively low at temperatures below 623 K. Conversely, this low-temperature activity is rather high in the case of pure CuO at temperatures above 623 K. The isotherms have a maximum as a function of the molar fraction of vanadium (maximum at V = 0.9, at temperatures above 598 K. This synergistic effect is pronounced at temperatures between 648 K and 698 K. In this temperature range, the combustion rates are 50% higher than those obtained for pure $V_2O_5$. The low temperature activity is maintained up to a molar fraction of 0.95 in respect of vanadium.

These results show that it is possible to obtain synergistic effects for mixtures of $V_2O_5$ and CuO.

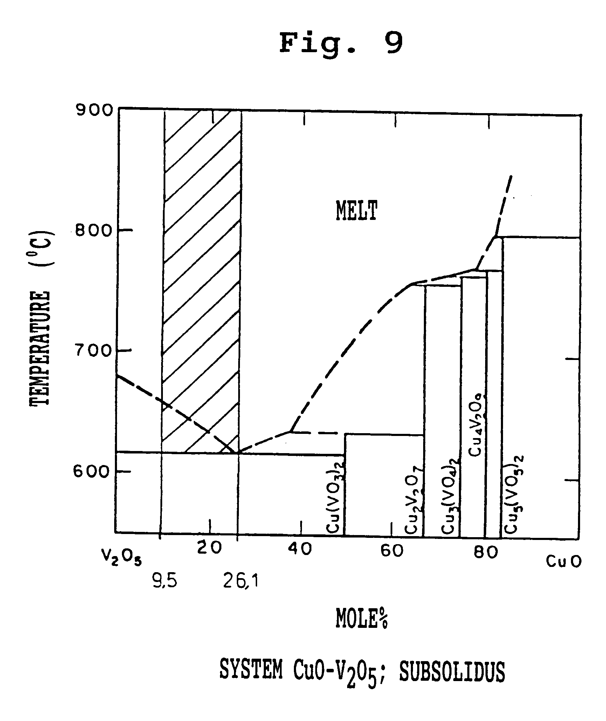

The synergistic effect observed for mixtures of $V_2O_5$ and CuO can be partly explained by the low melting point of the mixture of oxides. A phase diagram for the system $V_2O_5$-CuO is shown in Fig. 9, from which it appears that a melting point minimum (903 K) occurs at a molar amount of 0.82 V, i.e. very close to the activity maximum observed at the molar amount of 0.9 according to what is stated above. The molar fractions which fall within the invention have been marked with a hatched area. If the molar amount of Cu is increased, the melting point quickly rises. This may be an explanation of the lower activity of catalysts rich in Cu. As appears from Fig. 3, the activity at low temperatures (<623 K) is high for catalysts rich in Cu. At such low temperatures, the hydrocarbon combustion is considerable. CuO is much more active than $V_2O_5$ in combustion of hydrocarbons. The high low-temperature activity is extended to such high molar fractions of vanadium as 0.95. This means that the catalyst having the best high-temperature activity (molar fraction 0.9 V) also has a high low-temperature activity.

Even if the improved contact efficiency could be the main reason for the observed synergistic effect, the presence of Cu could change the net oxidation state of the vanadium phase and introduce lattice defects. According to Berg et al [J. van den Berg, J.H.L.M. Brans-Brabant, A.J. Dillen, J.W. Geus and M.J.J. Lammers, Ber. Bunsenges, Phys. Chem., 87(1983) 1204], several investigations show that the catalytic activity of $V_2O_5$ is enhanced when the concentration of lattice defects is increased. These lattice defects consist of oxygen vacancies (or $V^{4+}$-ions). According to Berg et al, the metal in $M_xV_2O_5$ is single-ionised, whereas the corresponding number of $V^{5+}$ is reduced to $V^{4+}$. In this way, the net oxidation state of the vanadium phase will be somewhat less than +5. The choice of carrier is also important to the development of lattice defects. If the interaction between the carrier and the oxide phase is high, as in the case of alumina, the lattice defects will be stabilised and could survive a high mobility of the structure (i.e. high temperatures).

EXAMPLE 5

Experiments were performed to investigate how the amount of active phase influences the result. The test conditions stated in Example 4 were used during these experiments. To investigate how the amount of active phase ($V_2O_5$/CuO; 90 mole% V, 10 mole% Cu) may influence the combustion rate, a series of catalysts with different loadings of active phase were prepared. These catalyst compositions , the true surface surface compositions and the specific surface areas are given in Table 7, from which it is obvious that the amount of Cu in the active phase is somewhat too high in these cases. The catalyst compositions lie on the Cu-rich side of the activity maximum in Fig. 3. The specific surface area is hardly affected by the amount of active phase at loadings below 10 wt%. At higher loadings, however, the specific surface area decreases dramatically from 202 $m^2$/g at 10wt% of active phase to 47 $m^2$/g at 20 wt%. This reduction in specific surface area is mainly caused by clogging of the pore system with active phase.

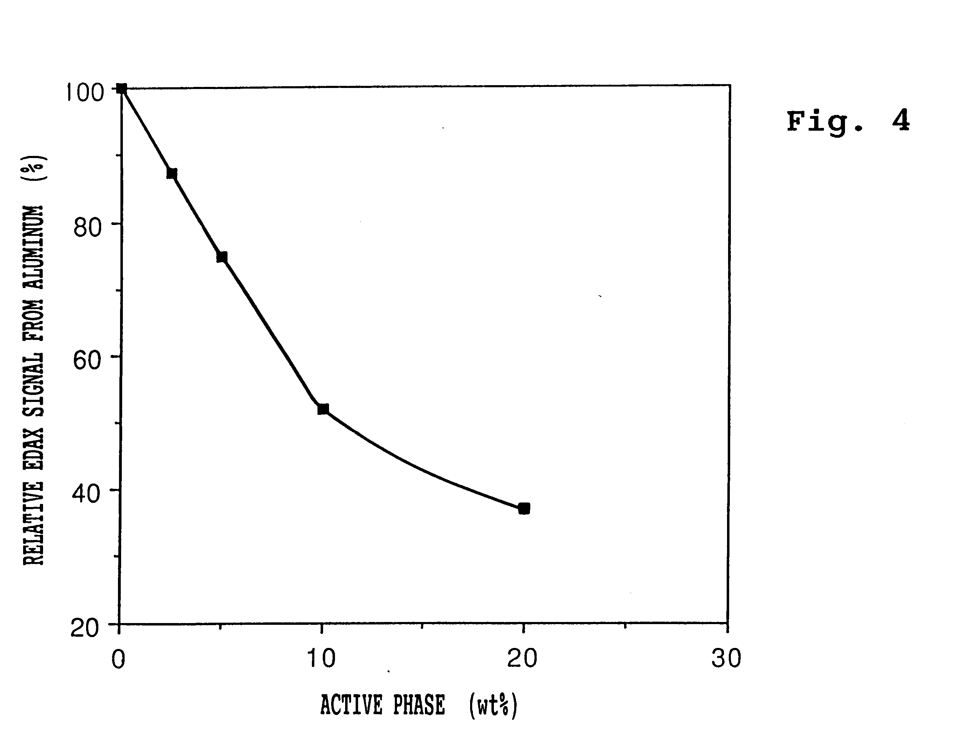

By measuring the EDAX signal from Al, it was possible to get a picture of the surface concentration of active phase. In Fig. 4 and Table 8, the relative signal from Al is shown as a function of the amount of active phase. The relative signal from Al decreases linearly as a function of the amount of active phase up to a loading of 10 wt%.

An increased surface concentration of the active phase on the carrier will lead to an enhanced activity. At low surface concentrations of active phase, i.e. when the surface is only partially covered with active phase, new catalytic sites are produced as the loading increases. At higher loadings, multiple loadings of active phase are formed, and no new sites are produced. As can be seen from Fig. 4, the surface concentration of active phase increases linearly up to a loading of 10 wt%. At still higher loadings, multiple layers are formed. The specific surface area decreases dramatically at loadings higher than 10 wt%, which is due to clogging of the pore system with active phase. If the inner surfaces were important in this reaction, a decrease in the specific surface area would lead to a decrease in activity. The combustion of the solid soot phase takes place mainly on the outer surfaces of the catalyst grains.

## EXAMPLE 6

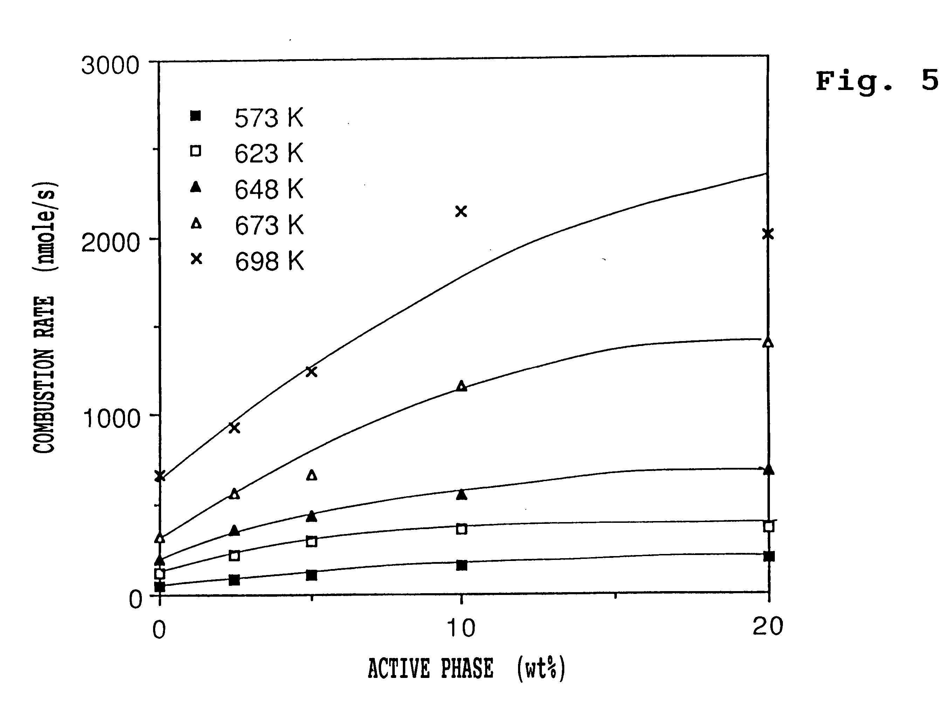

Experiments were also performed to determine the combustion rate as a function of the amount of active phase ($V_2O_5$/CuO: 90 mole% V, 10 mol% Cu) at different temperatures. The results are given in Fig. 5 and Table 9. The combustion rates increase up to a loading of 10 wt% of active phase. A further increase in the loading does not increase the activity of the catalyst.

## EXAMPLE 7

This experiment aims at determining how an addition of platinum will influence a catalyst which is intended for combustion of diesel soot and is based on $V_2O_5$ and CuO and contains V and Cu in the nominal mole ratio 90:10. The same test conditions as in Example 4 were used.

As mentioned earlier, very small amounts of precious metals (palladium, platinum and rhodium) could enhance the oxidising activity of the catalyst based on metal oxides. This phenomenon can be explained by a process where $O_2$ is adsorbed on the surface of the precious metal under dissociation and is then spread over the metal oxide phase where the oxidation reactions mainly take place.

To find out in what way the precious metal should be added, four different catalysts according to Table 10 were prepared. With regard to catalysts Nos. 1 and 2, the carrier material was first impregnated with a solution of $H_2PtCl_6$. This Pt precursor was then decomposed in an oxidising (catalyst No. 1) or in a reducing (catalyst No. 2) atmosphere. After this step, the catalysts were impregnated with solutions of $NH_4VO_3$ and $Cu(NO_3)_2$, dried and calcined in the usual manner. Catalysts Nos. 3 and 4 were impregnated with solutions of $NH_4VO_3$ and $Cu(NO_3)_2$ prior to the impregnation with $H_2PtCl_6$. Catalyst No. 3 was oxidised, whereas catalyst No. 4 was reduced prior to calcination.

The ratios between the combustion rates obtained for the different Pt-containing catalysts and the reference without Pt are given in Table 10. The addition of Pt enhances the activity distinctly at temperatures below 648 K. At temperatures above 648 K, the addition of Pt has no effect. The results show that the precious metal should be disposed on the metal oxide phase rather than on the carrier. In addition, $H_2Cl_6$ should be decomposed in a reducing atmosphere.

Earlier investigations [D.W. McKee, Carbon, 8 (1970) 623] state that precious metals are inactive in the catalytic combustion of carbon and soot. Precious metals are, however, very active in the oxidation of CO and hydrocarbons. The melting point of Pt is rather high, 2046 K. Because of this, the contact efficiency between the catalyst and the soot phase will be poor and the catalytic activity low. As will be seen from Table 10, very small amounts of Pt dispersed in the metal oxide phase distinctly increase the activity at low temperatures. At lower temperatures, mainly hydrocarbons are combusted. At higher temperatures, i.e. when the solid soot phase is combusted, the addition of Pt has no effect. Another advantage by adding Pt is that it suppresses the production of CO. In the absence of Pt, the selectivity for production of CO could be as high as 12.7 in this case. If 0.1 wt% Pt is added to the catalyst, this value is reduced to about 2%. These investigations show that Pt should be dispersed in the oxide phase rather than in the carrier. In this way, Pt will be closer to the zones where the combustion reactions mainly take place. If the activity is explained by a dissociative adsorption of oxygen followed by a surface diffusion of oxygen atoms to the oxide phase, these processes should be enhanced by a good contact between Pt and the oxide phase. The Pt precursor, i.e $H_2PtCl_6$, should be decom-

posed in a reducing atmosphere. It is known that surface oxides, and even bulk oxides of Pt, could be produced at low temperatures in an oxidising atmosphere. Through reducing decomposition of $H_2PtCl_6$, metallic platinum is formed. This fact could explain why the activity is higher for the catalyst that has been reduced prior to calcination. If the Pt loading is increased above 0.1 wt%, no further increase in the activity could be observed, which probably is due to the fact that the combustion of desorbed hydrocarbons is close to 100%.

## EXAMPLE 8

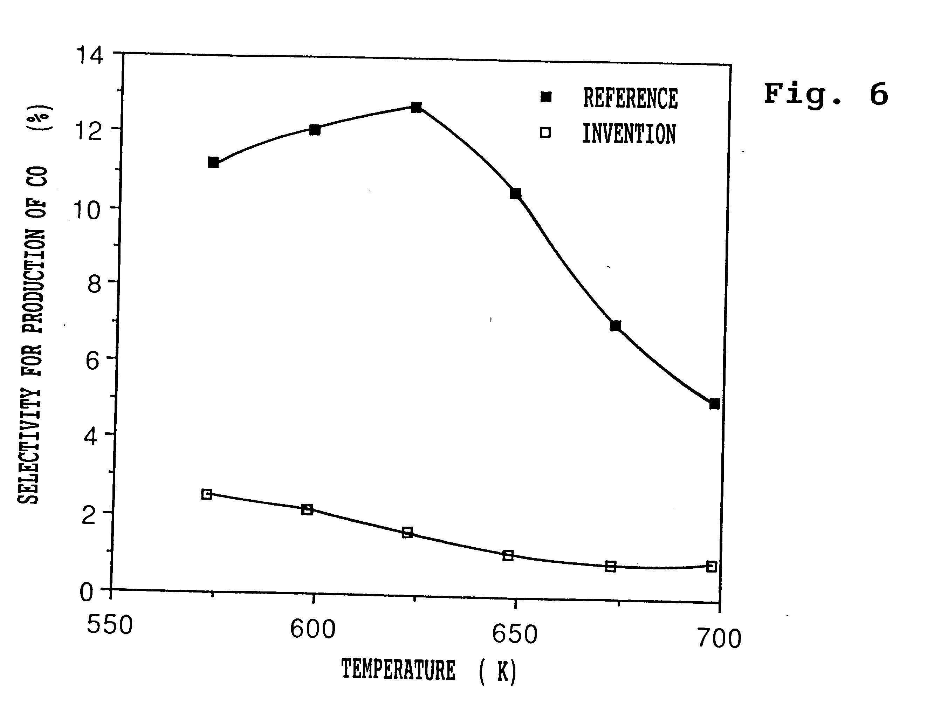

Even though the selectivity for CO production is a result of secondary reactions, it is of value to show how it is affected by the addition of Pt. To investigate this, a catalyst was used consisting of a carrier of $\gamma$-$Al_2O_3$ and 10 wt% active phase. The active phase contained 90 mole% V and 10 mole% Cu. The Pt loading was 0.10 wt%. The test conditions were the same as in Example 4. Fig. 6 and Table 11 present the selectivity for CO production as a function of the temperature for a reference sample without platinum and for a Pt-containing or Pt-enhanced catalyst. Both catalysts contained $V_2O_5$ and CuO in the nominal mole proportion 90:1 between V and Cu. At 623 K the selectivity was 12.7% for the reference catalyst. At the same temperature the selectivity for the Pt-containing catalyst was 2%. This indicates that the Pt loading has a great influence on a catalyst according to invention.

## EXAMPLE 9

To determine the effect of the amount of Pt loading, a series of experiments were performed, using the same test conditions as in Example 4. The series of catalysts with different amounts of Pt was prepared according to a method which gave the most active catalyst in accordance with the statements in the preceding Example. The carrier was impregnated with solutions of $NH_4VO_3$ and $Cu(NO_3)_2$. After these steps the catalyst was impregnated with a solution of $H_2PtCl_6$. The catalyst was then dried, reduced at 773 K (in a gas mixture containing 5% $H_2$ and balance $N_2$) during 1 h and finally calcinated for 1 h at 773 K in air. The Pt loadings of the catalysts are given in Table 12.

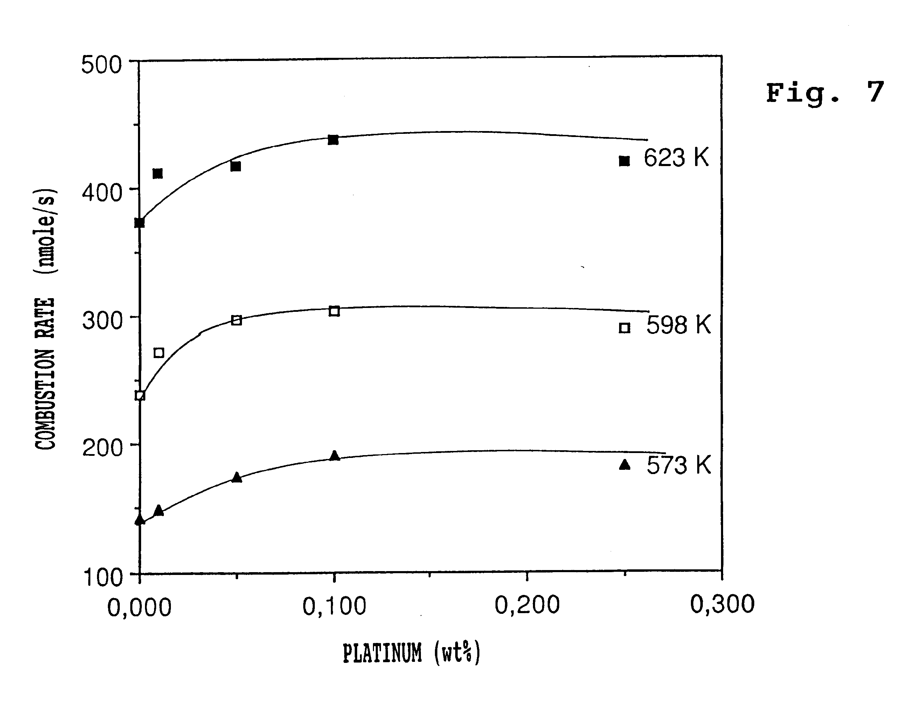

The combustion rate was plotted as a function of the Pt loading in Fig. 7. The corresponding figures are given in Table 12. From Fig. 7, it can be seen that very low amounts of Pt (0,01 wt%) enhance the combustion rate at low temperatures. At Pt loadings above 0.10 wt%, no further increase in activity is obtained.

## EXAMPLE 10

In this Example, the effect of the calcination temperature on the catalyst function was investigated. The catalyst consisted of $V_2O_5$ and CuO on $Al_2O_3$ (10% active phase; nominally 90 mole% V and 10 mole% Cu in the active phase).

The temperature of diesel exhaust gases is normally below 573 K. At high speed and heavy load operation, however, the temperature may get as high as 873 K. If the exhaust temperature is low (<573 K) for a long period of time, this will lead to an extensive accumulation of particles in the particle trap. If the exhaust gas temperature now rises sufficiently, the soot will ignite. The heat generated during the combustion will lead to a dramatic increase of the temperature in the trap (temperatures as high as 1273 K are possible). It is therefore of importance to investigate the temperature stability of the catalyst. A series of catalysts containing 0,10 wt% Pt apart from $V_2O_5$ and CuO in the nominal mole ratio 90:1 between V and Cu, was prepared according to the method described above. Calcination was carried out at different temperatures in the interval 773-1073 K. In Table 13, the catalyst compositions, the EDAX analysis and the specific surface areas are given. The specific surface area has decreased dramatically through the heat treatment, from 196 $m^2$/g at 773 K to about 2 $m^2$/g at 1073 K. This reduction is caused by sintering of the carrier material and transformation of $\gamma$-alumina into a alumina.

X-ray diffraction studies have shown that the carrier material mainly is in the form of $\gamma$ alumina in the catalyst which was calcined at 1073 K. As the calcination temperature is increased, $\delta$ alumina and $\alpha$ alumina are formed. After calcination at 1073 K, also a alumina could be detected. It is apparent that an extensive sintering and phase transformation has occurred during the high temperature calcination. In addition, several reflexes from the active phase could be observed for the catalyst calcined at temperatures above 873 K. As the specific surface area has decreased to such an extent, the dispersion of the active phase becomes poor, i.e. bulk compounds are produced. Such crystalline bulk compounds could be detected by X-ray analysis. It was, however, not possible to determine any specific phase in these cases. Probably it is a solid solution of several phases with disordered structures. Because of this, the d values will be shifted away from the values given in the handbooks. For the catalysts calcined at temperatures <873 K, the active phase is probably well dispersed on the carrier since the specific surface area still is high (196 and 71 $m^2$/g, respectively).

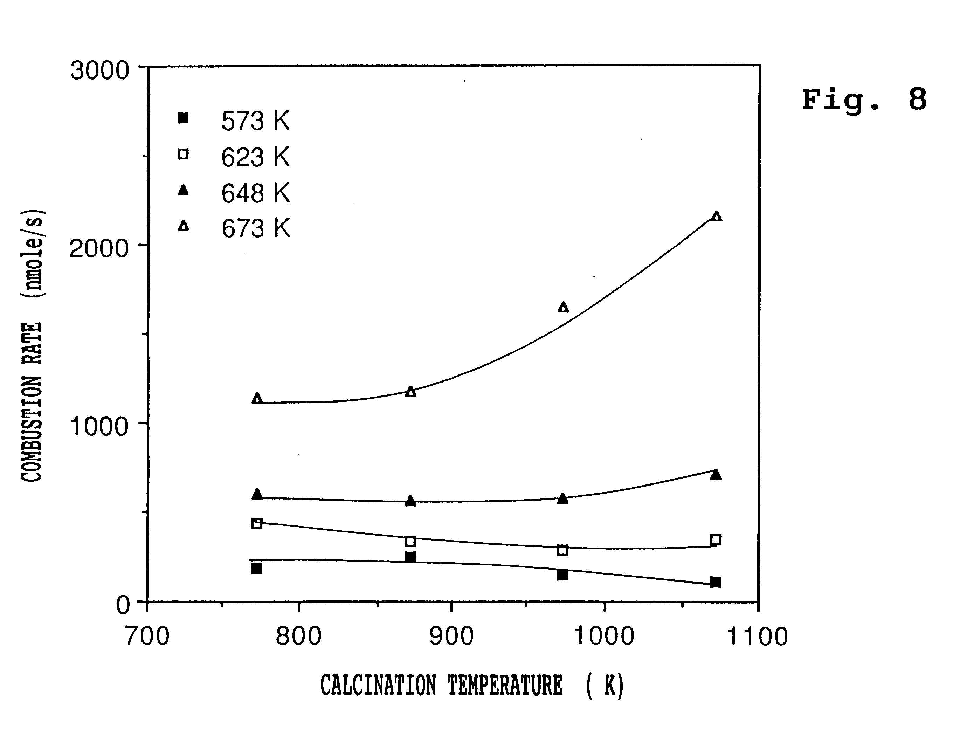

The combustion rate is shown as a function of the calcination temperature in Fig. 8. The corresponding values are given in Table 14. The activities at low temperatures decrease dramatically as the calcination temperature is increased, which is due to the structural break-down of the catalyst leading to a dramatic reduction in the specific surface area. Mainly hydrocarbons are combusted at temperatures below 623 K. This combustion process takes place also on the inner surfaces of the catalyst. The combustion of the solid soot phase, however, mainly occurs on the outer surfaces of the catalyst. As the outer surface area is relatively unaffected by the calcination, the high temperature activity should be maintained. Fig. 8 shows that the activities at temperatures above 623 K even increase as the calcination temperature is increased.

## EXAMPLE 11

In this Example, the effect of $SO_2$ on a composite catalyst having $V_2O_5$ and CuO in the nominal ratios 10 mole% Cu and 90 mole% V is investigated.

To investigate if the catalyst is susceptible to sulphur poisoning, experiments were carried out with 200 ppm $SO_2$ in the gas mixture. In Table 15, the ratios between the combustion rates obtained in the presence and in the absence of $SO_2$ are shown at a number of temperatures. As will be seen from this Table, the catalyst is unaffected by the presence of $SO_2$. The concentration of $SO_2$ in diesel exhaust gases is normally lower, seldom above 100 ppm.

The deactivation experiments with $SO_2$ (200 ppm) in the gas mixture show that the catalyst is unaffected. Since large amounts of $SO_2$ are released on heating of the soot, susceptible catalysts should be deactivated immediately during these experiments, also if no gaseous $SO_2$ is supplied.

These investigations show that a mixed oxide of $V_2O_5$ and CuO (a molar fraction of about 0.9 V) is very active in the combustion of diesel soot. Small amounts of Pt enhance its ability to combust hydrocarbons and carbon monoxide. As an alternative to platinum, also palladium or rhodium can be used. The ability of the catalyst to combust diesel soot is not affected by $SO_2$ or temperature shocks.

Summing up, it is found that a mixed oxide of $V_2O_5$ and CuO having a molar fraction of 0.85-0.95 V and 0.15-0.05, respectively, has a high activity in the combustion of diesel soot. The combustion of the solid soot phase takes place mainly on the outer surfaces of the catalyst grains, whereas CO and hydrocarbons are combusted also on the inner surfaces of the catalyst. The activity increases with the loading of active phase up to a value of 10 wt%. Very small amounts (<0.05 wt%) of platinum, palladium or rhodium dispersed on the active phase by decomposition of $H_2PtCl_6$ in a reducing atmosphere greatly enchance the low-temperature activity.

The carrier ($\gamma$ alumina) sinters and is transformed into other forms of alumina when subjected to high temperatures. If the catalyst is subjected to high temperatures (1073 K), the specific surface area therefore is reduced dramatically due to sintering. The activity of the catalyst regarding the combustion of hydrocarbon decreases, whereas its activity regarding the combustion of the solid soot phase is maintained.

## TABLE 1

### Combustion rate as a function of the inverted value of the temperature for mixtures of soot and carrier material

| Inverted value of temperature $K^{-1}$ | Combustion rate $\log_e [r_{tot} \ (nmol/s)]$ |
|---|---|
| 0.001293 | 7.659 |
| 0.001337 | 7.009 |
| 0.001383 | 6.455 |
| 0.001432 | 5.811 |
| 0.001486 | 5.303 |

## TABLE 2

Selectivity for CO production as a function of the
temperature for mixtures of soot and carrier material

| Temperature K | Selectivity for CO production % |
|---|---|
| 573 | 3.0 |
| 623 | 8.5 |
| 648 | 13.4 |
| 673 | 14.9 |
| 698 | 15.9 |
| 748 | 15.5 |
| 773 | 12.4 |

## TABLE 3

Ratio between the combustion rates in
the presence and the absence of catalyst

| Active material | Ratio $r_{tot} / r_{tot(Al_2O_3)}$ at indicated temperature ( K) | | | | | |
|---|---|---|---|---|---|---|
| | 573 | 598 | 623 | 648 | 673 | 698 |
| $V_2O_5$ | 1.9 | 2.5 | 2.1 | 2.8 | 3.5 | 4.3 |
| CuO | 4.0 | 3.0 | 2.4 | 2.4 | 1.5 | 1.6 |
| $V_2O_5$/CuO | 4.5 | 5.9 | 5.4 | 5.3 | 7.6 | 7.3 |
| $MnO_2$ | 2.6 | 2.6 | 2.1 | 1.8 | 1.8 | 1.6 |
| $Co_3O_4$ | 1.6 | 1.5 | 1.4 | 1.4 | 1.4 | 1.5 |
| $Fe_2O_3$ | 1.2 | 2.0 | 1.6 | 1.6 | 1.5 | 1.2 |
| $MoO_3$ | 1.0 | 1.7 | 1.4 | 1.6 | 1.6 | 1.6 |
| $Cr_2O_3$ | 2.6 | 3.0 | 2.3 | 1.8 | 1.4 | 1.3 |
| PbO | 1.0 | 1.3 | 1.1 | 1.3 | 1.3 | 1.4 |
| Ag | 2.8 | 2.9 | 2.2 | 1.8 | 1.5 | 1.7 |
| Pt | 3.0 | 3.8 | 2.4 | 2.2 | 1.5 | 1.5 |

$r_{tot}$ = combustion rate in the presence of catalyst and γ-aluminium oxide

$r_{tot(Al_2O_3)}$ = combustion rate in the absence of catalyst, but in the presence of γ-aluminium oxide

## TABLE 4

### Ratio between the combustion rates for deactivated and fresh catalyst

| Active mate- rial | Ratio $(r_{tot})_{SO_2} / (r_{tot})_0$ at indicated temperature ( K) | | |
|---|---|---|---|
| | 598 | 648 | 698 |
| $V_2O_5$ | 1.39 | 1.30 | 1.38 |
| CuO | 0.87 | 0.91 | 0.81 |
| $MnO_2$ | 0.89 | 1.00 | 1.00 |
| Ag | 0.67 | 0.71 | 0.73 |
| Pt | 0.77 | 0.90 | 1.08 |
| $(r_{tot})_{SO_2}$ = combustion rate for deactivated catalyst $(r_{tot})_0$ = combustion rate for fresh catalyst | | | |

## TABLE 5

### Analysis of used catalysts having different ratios between vanadium and copper

| Nominal composition | | EDAX composition | | Surf. area |
|---|---|---|---|---|
| V mole% | Cu mole% | V mole% | Cu mole% | $(m^2/g)$ |
| 0 | 100 | 0 | 100 | 207 |
| 29 | 71 | 37 | 63 | 233 |
| 40 | 60 | 41 | 59 | 225 |
| 50 | 50 | 45 | 55 | 227 |
| 67 | 33 | 67 | 33 | 231 |
| 86 | 14 | 90 | 10 | 215 |
| 95 | 5 | 95 | 5 | 219 |
| 99 | 1 | 99 | 1 | 204 |
| 100 | 0 | 100 | 0 | 210 |

EP 0 470 197 B1

## TABLE 6

**Combustion rate as a function of the molar fraction
of vanadium in the catalyst at different temperatures**

| Composition of active phase (EDAX analysis) mole% | | Combustion rate $[r_{tot}$ (nmol/s)] at indicated temperature ($^{\circ}$K) | | | | |
|---|---|---|---|---|---|---|
| Cu | V | 573 | 623 | 648 | 673 | 698 |
| 100 | 0 | 124 | 320 | 335 | 447 | 960 |
| 63 | 37 | 155 | 344 | 369 | 548 | 1053 |
| 59 | 41 | 176 | 356 | 418 | 671 | 1179 |
| 55 | 45 | 162 | 327 | - | - | - |
| 33 | 67 | 140 | 352 | 496 | 954 | 1689 |
| 10 | 90 | 149 | 444 | 674 | 1525 | 2443 |
| 5 | 95 | 141 | 389 | 650 | 1341 | 2517 |
| 1 | 99 | 105 | 381 | 547 | 1101 | 2366 |
| 0 | 100 | 90 | 266 | 501 | 1003 | 2031 |

## TABLE 7

**Analysis of catalysts with
different loadings of active phase**

| Loading of active phase wt% | EDAX composition | | Surface area $(m^2/g)$ | Area per unit weight of carrier $(m^2/g)$ |
|---|---|---|---|---|
| | V mole% | Cu mole% | | |
| 2.5 | 77 | 23 | 244 | 250 |
| 5.0 | 75 | 25 | 237 | 250 |
| 10.0 | 84 | 16 | 202 | 224 |
| 20.0 | 87 | 13 | 47 | 59 |

## TABLE 8

**Relative EDAX signal from Al as a function of the
loading of active phase in the catalyst of mixed oxides**

| Loading of active phase vikt% | Relative EDAX signal from Al |
|---|---|
| 0 | 100 |
| 2.5 | 87.5 |
| 5.0 | 75 |
| 10.0 | 52 |
| 20.0 | 37 |

15

## TABLE 9

### Combustion rate as a function of the loading of active phase at different temperatures

| Loading of active phase wt% | Combustion rate [$r_{tot}$ (nmol/s)] at indicated temperature ( K) | | | | |
|---|---|---|---|---|---|
| | 573 | 623 | 648 | 673 | 698 |
| 0 | 53 | 123 | 206 | 331 | 657 |
| 2.5 | 83 | 228 | 360 | 559 | 926 |
| 5.0 | 114 | 302 | 433 | 665 | 1235 |
| 10.0 | 166 | 358 | 552 | 1152 | 2138 |
| 20.0 | 197 | 365 | 677 | 1384 | 1994 |

## TABLE 10

### Ratio between the combustion rates in the presence and the absence of platinum

| No | Platinum deposited on | Catalyst reduced | Ratio $r_{tot(Pt-cont.)}$ / $r_{tot(Pt-less)}$ at indicated temperature ( K) | | | | |
|---|---|---|---|---|---|---|---|
| | | | 523 | 573 | 598 | 623 | 648 |
| 1 | carrier | no | 1.25 | 1.10 | 1.07 | 1.02 | 1.01 |
| 2 | carrier | yes | 1.08 | 1.09 | 1.07 | 1.02 | 0.97 |
| 3 | oxide | no | 1.25 | 1.26 | 1.26 | 1.10 | 0.99 |
| 4 | oxide | yes | 1.25 | 1.37 | 1.31 | 1.17 | 1.00 |

$r_{tot(Pt-cont.)}$ = combustion rate for catalyst containing platinum

$r_{tot(Pt-less)}$ = combustion rate for catalyst free from platinum

## TABLE 11

Selectivity for production of CO as a function of the
temperature, using a catalyst with or without platinum

| Tempe- rature | Selectivity for CO production (%) with indicated catalyst | |
|---|---|---|
| K | without Pt | with Pt |
| 573 | 11.2 | 2.5 |
| 598 | 12.1 | 2.17 |
| 623 | 12.7 | 1.63 |
| 648 | 10.6 | 1.13 |
| 673 | 7.06 | 0.87 |
| 698 | 5.1 | 0.93 |

## TABLE 12

Combustion rate as a function of
Pt loading in a catalyst of mixed oxides

| Pt loading wt% | Combustion rate [$r_{tot}$ (nmol/s)] at indicated temperature ( K) | | |
|---|---|---|---|
| | 573 | 598 | 623 |
| 0 | 141 | 239 | 373 |
| 0.01 | 149 | 271 | 412 |
| 0.05 | 173 | 297 | 416 |
| 0.1 | 190 | 304 | 436 |
| 0.25 | 182 | 288 | 418 |

## TABLE 13

Analysis of catalysts calcined at different temperatures

| Calcination temperature K | EDAX composition | | Surface area $m^2$/g |
|---|---|---|---|
| | mole% V | mole% Cu | |
| 773 | 92 | 8 | 196 |
| 873 | 93 | 7 | 71 |
| 973 | 94 | 6 | 8.4 |
| 1073 | 93 | 7 | 2.2 |

## TABLE 14

### Combustion rate as a function of the calcination temperature

| Calcina-tion tempera-ture K | Combustion rate $[r_{tot}$ (nmol/s)] at indicated temperature ( K) | | | |
|---|---|---|---|---|
| | 573 | 623 | 648 | 673 |
| 773 | 190 | 436 | 601 | 1134 |
| 873 | 249 | 336 | 562 | 1165 |
| 973 | 145 | 289 | 573 | 1641 |
| 1073 | 111 | 345 | 712 | 2162 |

## TABLE 15

### Resistance of catalyst to sulphur poisioning

| Temperature K | Ratio $(r_{tot})_{SO_2}/(r_{tot})_O$ |
|---|---|
| 573 | 0.99 |
| 598 | 1.02 |
| 623 | 0.97 |
| 648 | 0.99 |
| 673 | 0.98 |
| 698 | 1.02 |

$(r_{tot})_{SO_2}$ = combustion rate in the presence of 200 ppm $SO_2$

$(r_{tot})_O$ = combustion rate for fresh catalyst

## TABLE 16

### Chemical composition of diesel soot used in the experiments of the Examples

| Element | Amount | |
|---------|--------|--------|
| | wt% | atomic% |
| C | 54 | 54 |
| N | 0.61 | 0.53 |
| H | 1.54 | 18.5 |
| S | 7.1 | 2.7 |
| Fe | 6.1 | 1.31 |
| Ca | 0.53 | 0.157 |
| Ni | 0.055 | 0.0112 |
| Mn | 0.012 | $2.6.10^{-3}$ |
| Cu | 0.012 | $2.3.10^{-3}$ |
| Cr | $7.5.10^{-3}$ | $1.74.10^{-3}$ |
| Co | $1.6.10^{-3}$ | $3.3.10^{-4}$ |
| V | $2.0.10^{-5}$ | $4.7.10^{-6}$ |
| O* | 30 | 23 |
| * calculated as difference | | |

## Claims

1. A method of purifying exhaust gases from diesel engines by catalytic burning of soot and hydrocarbons, in which method the exhaust gases are conveyed at a temperature of at least 300°C, preferably at least 350°C, over a catalyst containing vanadium and copper oxides carried by a carrier, **characterised** by using a catalyst in which the molar ratio of V:Cu is from 85:15 to 95:5.

2. Method as claimed in claim 1, **characterised** in that a catalyst is used having a molar ratio of V:Cu of about 90:10.

3. Method as claimed in claim 1 or 2, **characterised** in that the exhaust gases are conducted over a catalyst which also contains catalyst material for the combustion of hydrocarbons, especially platinum, palladium and/or rhodium.

4. Method as claimed In claim 1, 2 or 3, **characterised** in that the catalytic combustion is carried out at a temperature of 300-500°C.

5. Catalyst for the purification of exhaust gases from diesel engines, comprising a carrier and a catalytic material comprising oxides of vanadium and copper, **characterised** in that vanadium and copper are present in a molar ratio of V:Cu of from 85:15 to 95:5.

6. Catalyst as claimed in claim 5, **characterised** in that the molar ratio of V:Cu in the catalyst is about 90:10.

7. Catalyst as claimed in claim 5 or 6, **characterised** in that the catalyst contains 5-25 wt% vanadium- and copper oxides.

8. Catalyst as claimed in claim 5, 6 or 7, **characterised** in that the catalyst also contains catalyst material capable of combusting hydrocarbons, preferably platinum, palladium and/or rhodium.

9. Catalyst as claimed in any one of claims 5-8, **characterised** in that it contains 0.01-0.25 wt% platinum,

EP 0 470 197 B1

palladium and/or rhodium.

## Patentansprüche

1. Verfahren zur Reinigung von Dieselmotor-Abgasen durch katalytische Verbrennung von Russ und Kohlenwasserstoffen, bei dem die Abgase bei einer Temperatur von mindestens 300°C, vorzugsweise mindestens 350°C, über einen Katalysator geleitet werden, der von einem Träger getragene Vanadium- und Kupferoxide enthält, **gekennzeichnet** durch die Anwendung eines Katalysators, in dem das Molverhältnis V:Cu von 85:15 bis 95:5 ist.

2. Verfahren nach Anspruch 1, dadurch **gekennzeichnet**, dass ein Katalysator mit dem Molverhältnis V:Cu von etwa 90:10 verwendet wird.

3. Verfahren nach Anspruch 1 oder 2, dadurch **gekennzeichnet**, dass die Abgase über einen Katalysator geleitet werden, der auch Katalysatormaterial zur Verbrennung von Kohlenwasserstoffen, insbesondere Platin, Palladium und/oder Rhodium enthält.

4. Verfahren nach Anspruch 1, 2 oder 3, dadurch **gekennzeichnet**, dass die katalytische Verbrennung bei einer Temperatur von 300-500°C ausgeführt wird.

5. Katalysator zur Reinigung von Dieselmotor-Abgasen, umfassend einen Träger und ein katalytisches Material, das Vanadium- und Kupferoxide enthält, dadurch **gekennzeichnet**, dass Vanadium und Kupfer im Molverhältnis V:Cu von 85:15 bis 95:5 vorhanden sind.

6. Katalysator nach Anspruch 5, dadurch **gekennzeichnet**, dass das Molverhältnis V:Cu im Katalysator etwa 90:10 ist.

7. Katalysator nach Anspruch 5 oder 6, dadurch **gekennzeichnet**, dass der Katalysator 5-25 Gew.-% Vanadium- und Kupferoxide enthält.

8. Katalysator nach Anspruch 5, 6 oder 7, dadurch **gekennzeichnet**, dass der Katalysator auch Katalysatormaterial, vorzugsweise Platin, Palladium und/oder Rhodium, enthält, das fähig ist, Kohlenwasserstoffe zu verbrennen.

9. Katalysator nach einem der Ansprüche 5-8, dadurch **gekennzeichnet**, dass er 0,01-0,25 Gew.-% Platin, Palladium und/oder Rhodium enthält.

## Revendications

1. Procédé pour l'épuration des gaz d'échappement dans les moteurs diesel au moyen de la combustion catalytique de la suie et des hydrocarbures, dans lequel les gaz d'échappement sont conduits, à une température de 300°C au moins, de préférence de 350°C au moins, au-dessus d'un catalyseur contenant des oxydes de vanadium et de cuivre entraînés par un agent véhiculeur, **caractérisé** en ce que l'on utilise un catalyseur dont le rapport molaire de V:Cu est de 85:15 à 95:5.

2. Procédé selon la revendication 1, **caractérisé** en ce que l'on utilise un catalyseur dont le rapport molaire de V:Cu est d'environ 90:10.

3. Procédé selon la revendication 1 ou 2, **caractérisé** en ce que l'on conduit les gaz d'échappement au-dessus d'un catalyseur contenant en outre de la matière catalytique pour la combustion des hydrocarbures, en particulier le platine, le palladium et/ou le rhodium.

4. Procédé selon la revendication 1, 2 ou 3, **caractérisé** en ce que l'on met en oeuvre la combustion catalytique à une température de 300-500°C.

5. Catalyseur pour l'épuration des gaz d'échappement dans les moteurs diesel, comprenant un agent véhiculeur et une matière catalytique contenant des oxydes de vanadium et de cuivre, **caractérisé** en ce que le rapport molaire de V:Cu est de 85:15 à 95:5.

20

6. Catalyseur selon la revendication 5, **caractérisé** en ce que le rapport molaire de V:Cu est d'environ 90:10.

7. Catalyseur selon la revendication 5 ou 6, **caractérisé** en ce qu'il contient de 5% à 25% en poids d'oxydes de vanadium et de cuivre.

8. Catalyseur selon la revendication 5, 6 ou 7, **caractérisé** en ce qu'il contient en outre de la matière catalytique ayant la capacité de brûler les hydrocarbures, de préférence le platine, le palladium et/ou le rhodium.

9. Catalyseur selon l'une quelconque des revendications 5 à 8, **caractérisé** en ce qu'il contient de 0,01% à 0,25% en poids de platine, de palladium et/ou de rhodium.

Fig. 1

Fig. 2

EP 0 470 197 B1

Fig. 3

Fig. 4

EP 0 470 197 B1

Fig. 5

Fig. 6

Fig. 7

EP 0 470 197 B1

Fig. 8

EP 0 470 197 B1

## Fig. 9

SYSTEM CuO-V$_2$O$_5$; SUBSOLIDUS

Fig 10